# EUROPÄISCHE PATENTANMELDUNG

(11) **EP 4 332 807 A1**
(43) Veröffentlichungstag der Anmeldung: **06.03.2024**
(21) Anmeldenummer: 22192881.5
(22) Anmeldetag: 30.08.2022
(51) Int. Cl.: G06F 21/57, G06N 20/00, H04L 9/40

(54) **VERFAHREN ZUM ÜBERWACHEN EINES STEUERPROGRAMMS ZUMINDEST EINER FUNKTIONSEINHEIT EINER MASCHINENANLAGE, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Becker, Stefan, 91325 Adelsdorf (DE); Falk, Rainer, 85586 Poing (DE); Feist, Christian Peter, 80689 München (DE); Janssen, Henning, 76189 Karlsruhe (DE)
(74) Vertreter: Siemens Patent Attorneys

(57) **Zusammenfassung**

Die Erfindung betrifft ein Verfahren zum Überwachen eines Steuerprogramms (12) zumindest einer Funktionseinheit (14) einer Maschinenanlage (16) mittels einer elektronischen Recheneinrichtung (10), mit den Schritten:
- Detektieren einer Schwachstelle (18) innerhalb des Steuerprogramms (12); (S1)
- Kategorisieren der detektierten Schwachstelle (18) auf Basis bereits in der Vergangenheit analysierten Schwachstellen; (S2.1, S2.2, S2.3) und
- Vorschlagen einer Behebungsmaßnahme für die Schwachstelle (18) in Abhängigkeit von der Kategorisierung. (S3)
Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Überwachen eines Steuerprogramms zumindest einer Funktionseinheit einer Maschinenanlage mittels einer elektronischen Recheneinrichtung gemäß dem geltenden Patentanspruch 1. Ferner betrifft die Erfindung ein computerlesbares Speichermedium, ein Computerprogrammprodukt sowie eine elektronische Recheneinrichtung.

Es ist bereits bekannt, dass beispielsweise bei Maschinenanlagen in Produktionsketten entsprechende Software beziehungsweise Steuerprogramme oder auch so genannte Firmware Schwachstellen aufweisen können. Daher ist es wichtig, dass die Software oder die Firmware aktualisiert werden kann. Dabei wird ein so genannter Patch oder eine neue Version der Software beziehungsweise Firmware eingespielt. Der Kunde hat aktuell das Problem, dass er momentan jegliche Änderungen einzeln bearbeiten muss. Die Schwachstellen können folgendermaßen kategorisiert werden. Beispielsweise kann eine Schwachstelle als offen oder als behoben kategorisiert werden. Ferner kann ermittelt werden, ob die Software beziehungsweise Firmware nicht betroffen von der entsprechenden Schwachstelle ist. Dementsprechend wird aktuell manuell beurteilt, welche Kategorie die Schwachstelle hat und eine Zuordnung wird entsprechend vorgenommen.

Es ist ferner bekannt, dass Informationen zu Schwachstellen in einer strukturierten Art bereitgestellt werden, so dass diese automatisiert erfasst und bearbeitet werden können. Dies ist unter dem Begriff CVE (common vulneribilities and exposures) bekannt. Eine Schwachstelle wird dabei durch einen eindeutigen Identifier identifiziert, es werden die betroffenen Hardware- oder Software-Komponenten spezifiziert und es wird die Schwere durch einen CVSS-Score (common vulneribilities scoring system) bewertet. Informationen zu Schwachstellen werden über entsprechende CVE-Datenbanken bereitgestellt. Durch ein so genanntes SCAP (security content automation protocol) werden Datenformate definiert, um ein Security-Management zu automatisieren.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen vereinfacht ein Steuerprogramm überwacht werden kann.

Diese Aufgabe wird durch ein Verfahren, ein Computerprogrammprodukt, ein computerlesbares Speichermedium sowie durch eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Überwachen eines Steuerprogramms zumindest einer Funktionseinheit einer Maschinenanlage mittels einer elektronischen Recheneinrichtung. Es erfolgt das Detektieren einer Schwachstelle innerhalb des Steuerprogramms. Die detektierte Schwachstelle wird auf Basis bereits in der Vergangenheit analysierter Schwachstellen kategorisiert. Es erfolgt das Vorschlagen einer Behebungsmaßnahme für die Schwachstelle in Abhängigkeit von der Kategorisierung.

Insbesondere basiert somit der Gedanke der Erfindung auf der automatisierten Kategorisierung beziehungsweise Gruppierung von gemeldeten Schwachstellen und den sich daraus in einer konkreten Umgebung abgeleiteten Maßnahmen. Dazu erfolgt eine Analyse der Schwachstellenmeldungen, welche Aktionen daraus im konkreten Fall abgeleitet werden. Innerhalb dieser Analyse wird beispielsweise eine Schwachstelle beurteilt, ob diese offen ist, behoben ist, oder ob dieses Steuerprogramm nicht von der Schwachstelle betroffen ist.

Im nächsten Schritt findet dann zum Beispiel eine programmunterstützte automatische Zuordnung der Schwachstelle in eine der aufgelisteten beziehungsweise genannten Kategorien statt, in die zum Beispiel bisher ähnliche Schwachstellen kategorisiert wurden.

Insbesondere kann somit auch eine Suchfunktion nach ähnlichen Schwachstellen und deren Handhabung vorgeschlagen werden, welches den Vorteil hat, dass sie im Wesentlichen einen manuellen Aufwand zur Suche und einem Handling einspart und die Nutzerfreundlichkeit wesentlich erhöht. Durch die möglichst spezifisch angepasste Suche kann die Suchauswahl darüber sinnvoll ergänzt werden und dem Kunden beziehungsweise Anbieter für alle passenden Lösungsmöglichkeiten aufgezeigt werden, zum Beispiel das entsprechende Patch für seine Schwachstelle zu finden und einzusetzen.

Es sei an dieser Stelle angemerkt, dass der Begriff "Patch" dabei breit zu verstehen ist. Es wird damit allgemein ein Aktualisieren einer Software und/oder Firmware bezeichnet beziehungsweise des Steuerprogramms. Er kann insbesondere ein Update für industrielle IoT (Internet of Things - Internet der Dinge)-Geräte oder ein Steuergerät darstellen. Sie kann auch ein Update für eine virtuelle Automatisierungsfunktion oder ein virtuelles Steuergerät der IoT-Geräte darstellen.

Insbesondere ist es erfindungsgemäß vorgesehen, dass eine komplette Aktualisierung und somit Stillstand der Maschine verhindert wird, indem eine entsprechende Behebungsmaßnahme durchgeführt wird, welche die Maschine nicht zum Stillstand bringt. Die Maschine selbst weist dabei die zumindest eine Funktionseinheit, insbesondere eine Vielzahl von Funktionseinheiten, auf. Eine Funktionseinheit kann dann wiederum einer Vielzahl von Steuerprogrammen zugeordnet werden.

Somit ist es Aufgabe der Erfindung, auf Basis von einfachem Überprüfen der Steuerprogramme und entsprechende Handlungsempfehlungen beziehungsweise Behebungsmaßnahmen ein Stillstand der Maschine zu verhindern, wodurch insbesondere beispielsweise bei Serienprozessanlagen ein längerer Ausfall verhindert werden kann, wodurch massiv Aufwand und Geld eingespart werden kann.

Gemäß einer vorteilhaften Ausgestaltungsform wird die Schwachstelle in zumindest zwei, insbesondere zumindest drei, Kategorien kategorisiert. Insbesondere wird dabei eine erste Kategorie die Schwachstelle als offen bezeichnen, eine zweite Kategorie die Schwachstelle als geschlossen bezeichnen und eine dritte Kategorie die Schwachstelle als nicht relevant für die Funktionseinheit bezeichnen. Somit kann auf einfache Art und Weise eine Kategorisierung durchgeführt werden, welche die Schwachstellen entsprechend beschreibt und entsprechende Behebungsmaßnahmen, beispielsweise bei lediglich offenen Schwachstellen, vorgeschlagen werden.

Ferner kann vorgesehen sein, dass die Kategorisierung auf Basis einer Schwachstellen-Charakteristik der Schwachstelle durchgeführt wird. Insbesondere wird somit die Ähnlichkeit der Schwachstellen derart definiert, dass eine bestimmte "Policy" für die Schwachstellen-Charakteristik festgelegt wird. Hierbei kann beispielsweise vorgesehen sein, dass mittels der Schwachstellen-Charakteristik eine Art und/oder ein Hersteller der betroffenen Funktionseinheit und/oder ein Ort der betroffenen Funktionseinheit beschrieben wird. Beispielsweise kann hierzu die Art und Hersteller der betroffenen Komponente beziehungsweise Funktionseinheit, der Ort, insbesondere physikalisch und/oder topologisch, der betroffenen Funktionseinheit, die Art der Schwachstelle, beispielsweise eine Remote Code Execution, Buffer-Overflow, Deny of Service, Verfügbarkeit eines Updates beziehungsweise Workarounds, definiert werden, wodurch ein entsprechender Suchauftrag beginnen kann, der zu den vorgegebenen Parametern die bisherige Schwachstellen-Beurteilung durchgeht, abgleicht und aufgrund der passenden Kriterien einen Eingruppierungsvorschlag beziehungsweise Kategorisierung ausgibt.

Ferner kann vorgesehen sein, dass als Behebungsmaßnahme eine Aktualisierung des Steuerprogramms vorgeschlagen wird. Insbesondere die Kategorisierung beziehungsweise Eingruppierung ist die Basis für das weitere Vorgehen, zum Beispiel das Definieren und Ausführen einer geeigneten Behebungsmöglichkeit dieser Schwachstelle durch einen entsprechenden Patch. Es kann auch herauskommen, dass die Schwachstelle bereits behoben ist oder als nicht kritisch beziehungsweise nicht betroffen beurteilt wird. Auch kann es sein, dass weitere Gegenmaßnahmen, wie ein Abtrennen eines Teilnetzes, Sperren eines Ports durch eine Firewall, ein Anhalten einer Maschine, ein Herunterfahren eines Automatisierungssystems oder dergleichen erfolgen.

Ferner kann vorgesehen sein, dass innerhalb der Kategorisierung die Schwachstelle mit weiteren Schwachstellen verglichen wird und bei einer Ähnlichkeit der Schwachstelle mit zumindest einer weiteren geschlossenen Schwachstelle die Behebungsmaßnahme der bereits geschlossenen weiteren Schwachstelle für die Schwachstelle vorgeschlagen wird. Mit anderen Worten kann die Systematik der bestimmten Policy auch zusätzlich noch durch einen Abgleich von vorgenannten Handlungsmaßnahmen ergänzt werden, die bei einem ähnlichen Fall beziehungsweise Schwachstelle Wiederverwendung bedeuten können. Es wird dazu beispielsweise die elektronische Recheneinrichtung als maschineller Lernalgorithmus bereitgestellt und angelernt, welche Handlungen bei einer bestimmten Schwachstellenmeldung durch einen Sicherheits-Administrator vorgenommen wurden. Diese Handlungen werden als Vorlage oder als Beispiel erfasst. Bei einer ähnlichen Schwachstellen-Meldung kann dann automatisiert eine oder mehrere Vorlagen vorgeschlagen werden. Die Handlungsempfehlung kann angeben, was zu tun ist und weiterhin, unter welchen Randbedingungen des technischen Systems oder der Automatisierungskomponente diese Maßnahmen umgesetzt werden.

Eine weitere vorteilhafte Ausgestaltungsform sieht vor, dass die Detektion der Schwachstelle und/oder die Kategorisierung der Schwachstelle und/oder das Vorschlagen der Behebungsmaßnahmen mittels eines maschinellen Lernalgorithmus der elektronischen Recheneinrichtung durchgeführt wird. Beispielsweise kann der maschinelle Lernalgorithmus als künstliche Intelligenz, beispielsweise in Form eines neuronalen Netzwerks, bereitgestellt werden. Insbesondere kann somit zukünftig die Detektion, Kategorisierung und/oder der Vorschlag zur Behebungsmaßnahmen vereinfacht und schnell durchgeführt werden. Des Weiteren kann auch vorgesehen sein, dass beispielsweise die Behebung selbst automatisiert mittels des neuronalen Netzwerks durchgeführt wird.

Ferner hat es sich als vorteilhaft erwiesen, wenn die kategorisierte Schwachstelle analysiert wird und für eine Detektion und/oder eine Kategorisierung und/oder eine Behebung einer zukünftigen Schwachstelle berücksichtigt wird. Somit kann die elektronische Recheneinrichtung lernen und zukünftig entsprechend noch nicht kategorisierte Schwachstellen nutzen, um diese für zukünftige Schwachstellen heranzuziehen. Somit handelt es sich um ein lernfähiges System, welches vereinfacht überprüft werden kann.

Es hat sich weiterhin als vorteilhaft erwiesen, wenn eine Auswirkung der Behebung für die Schwachstelle auf eine weitere detektierte Schwachstelle überprüft wird. Beispielsweise kann vorgesehen sein, dass mehrere Funktionseinheiten von einer Schwachstelle betroffen sind. Diese Schwachstelle kann wiederum geschlossen werden, weil zum Beispiel eine Firewall-Einstellung nicht passte oder die Firewall-Einstellung durch Blockieren eines Ports geändert wird. Aufgrund dieser Maßnahme kann wiederum die entsprechende Policy, insbesondere als übergeordnetes Programm, anzeigen, dass diese Art der Änderung auch für die weitere Schwachstelle oder für eine nochmals weitere Schwachstelle passen würde und somit in gleicher Weise dort umgesetzt werden könnte. So können durch eine Port- oder Konfigurationsänderung mehrere Schwachstellen gleichzeitig behoben werden. Außerdem kann auch ein so genannter Patch mehrere Schwachstellen beheben und für mehrere Komponenten anwendbar sein.

Ferner hat es sich als vorteilhaft erwiesen, wenn die elektronische Recheneinrichtung als maschinenexterne, zentrale elektronische Recheneinrichtung bereitgestellt wird. Beispielsweise kann die elektronische Recheneinrichtung dann mit einem Netzwerk verbunden sein, um entsprechende Patches bereitstellen zu können. Ferner kann die elektronische Recheneinrichtung mit einer Vielzahl von Maschinen gekoppelt sein, so dass auch entsprechende Behebungsmaßnahmen auf der einen Maschine möglicherweise für eine andere Maschine ebenfalls relevant sein können. Somit kann ein geschlossenes System geschaffen werden, wobei auf Basis der elektronischen Recheneinrichtung wiederum vorteilhaft die Überprüfung der Schwachstellen durchgeführt werden kann.

Gemäß einer weiteren vorteilhaften Ausgestaltungsform wird die Durchführung der Behebungsmaßnahme automatisiert mittels der elektronischen Recheneinrichtung durchgeführt. Insbesondere kann es vorgesehen sein, dass der elektronischen Recheneinrichtung der Vorschlag zur Behebungsmaßnahme gegeben wird, wobei die elektronische Recheneinrichtung wiederum nach dem Vorschlag automatisiert die Behebungsmaßnahme auch durchführt. Alternativ kann vorgesehen sein, dass der Vorschlag beispielsweise einem Nutzer der elektronischen Recheneinrichtung vorgeschlagen wird, und dieser manuell die entsprechende Behebungsmaßnahme durchführen kann.

Bei dem vorgeschlagenen Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt kann auch als Computerprogramm bezeichnet werden.

Ferner betrifft die Erfindung auch ein computerlesbares Speichermedium mit dem Computerprogrammprodukt.

Ein weiterer Aspekt der Erfindung betrifft die elektronische Recheneinrichtung zum Überwachen eines Steuerprogramms zumindest einer Funktionseinheit einer Maschinenanlage, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise elektronische Bauteile, beispielsweise Prozessoren, Schaltkreise, insbesondere integrierte Schaltkreise, sowie weitere elektronische Bauteile auf, um entsprechende Verfahrensschritte durchführen zu können.

Vorteilhafte Ausgestaltungsformen des Verfahrens sind als vorteilhafte Ausgestaltungsformen des Computerprogrammprodukts, des computerlesbaren Speichermedium sowie der elektronischen Recheneinrichtung anzusehen. Die elektronische Recheneinrichtung weist insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung wird nun anhand von Ausführungsbeispielen in den Zeichnungen näher erläutert. Hierzu zeigen:
- Fig. 1: ein schematisches Ablaufdiagramm gemäß einer Ausführungsform des Verfahrens; und
- FIG. 2: ein schematisches Blockschaltbild gemäß einer Ausführungsform einer elektronischen Recheneinrichtung.

In den Figuren sind gleiche oder funktionsgleiche Elemente mit den gleichen Bezugszeichen versehen.

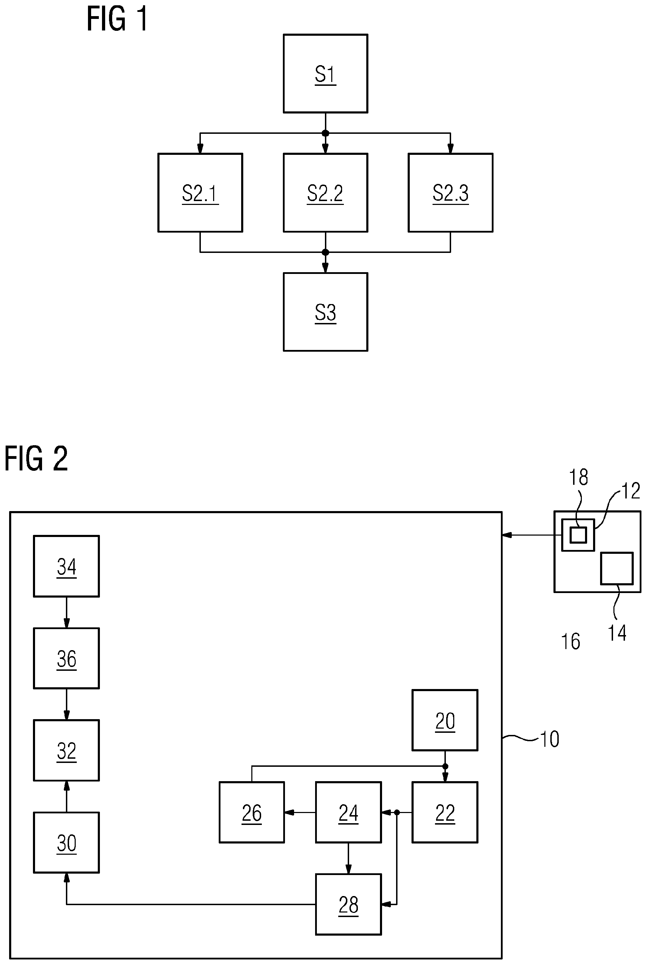

FIG. 1 zeigt ein schematisches Ablaufdiagramm gemäß einer Ausführungsform des Verfahrens. Insbesondere zeigt die FIG. 1 ein Verfahren zum Überwachen eines Steuerprogramms 12 (FIG. 2) zumindest einer Funktionseinheit 14 (FIG. 2) einer Maschinenanlage 16 (FIG. 2) mittels einer elektronischen Recheneinrichtung 10 (FIG. 2).

In einem ersten Schritt S1 erfolgt das Detektieren einer Schwachstelle 18 (FIG. 2) innerhalb des Steuerprogramms 12. In einem zweiten Schritt S2.1, S2.2, S2.3 erfolgt das Kategorisieren der detektierten Schwachstelle 18 auf Basis bereits in der Vergangenheit analysierter Schwachstellen. In einem dritten Schritt S3 erfolgt dann wiederum das Vorschlagen einer Behebungsmaßnahme für die Schwachstelle 18 in Abhängigkeit von der Kategorisierung.

Insbesondere zeigt die FIG. 1, dass die Schwachstelle 18 in zumindest zwei, insbesondere zumindest drei, Kategorien kategorisiert wird. Insbesondere kann eine erste Kategorie die Schwachstelle 18 als offen bezeichnen, was vorliegend durch den Schritt S2.1 dargestellt ist. Ferner kann eine zweite Kategorie die Schwachstelle 18 als geschlossen bezeichnen, was vorliegend durch den zweiten Schritt S2.2 bezeichnet ist. Ferner kann die Schwachstelle 18 als nicht relevant für die Funktionseinheit 14 bezeichnet werden, was vorliegend durch den zweiten Schritt S2.3 dargestellt ist.

Die Kategorisierung kann insbesondere auf Basis einer Schwachstellen-Charakteristik der Schwachstelle 18 durchgeführt werden. Insbesondere kann mittels der Schwachstellen-Charakteristik eine Art und/oder ein Hersteller der betroffenen Funktionseinheit 14 und/oder ein Ort der betroffenen Funktionseinheit 14 beschrieben werden. Als Behebungsmaßnahme kann beispielsweise eine Aktualisierung des Steuerprogramms 12 vorgeschlagen werden.

Ferner kann vorgesehen sein, dass innerhalb der Kategorisierung die Schwachstelle 18 mit weiteren Schwachstellen verglichen wird und bei einer Ähnlichkeit der Schwachstelle 18 mit zumindest einer weiteren geschlossenen Schwachstelle die Behebungsmaßnahme der bereits geschlossenen weiteren Schwachstelle für die Schwachstelle 18 vorgeschlagen wird.

Des Weiteren kann vorgesehen sein, dass die kategorisierte Schwachstelle 18 analysiert wird und für eine Detektion und/oder eine Kategorisierung und/oder eine Behebung einer zukünftigen Schwachstelle berücksichtigt wird. Des Weiteren kann eine Auswirkung der Behebung für die Schwachstelle 18 auf weitere detektierte Schwachstellen überprüft werden.

FIG. 2 zeigt ein schematisches Blockschaltbild gemäß einer Ausführungsform der elektronischen Recheneinrichtung 10. Die FIG. 2 zeigt insbesondere, dass in einem Block 20 eine Zuordnung von neuen Schwachstellen zu der Funktionseinheit 14, beispielsweise die Schwachstelle 18, durchgeführt wird. In einem Block 22 wird der Status beziehungsweise die Kategorie der Schwachstelle 18 durch einen maschinellen Lernalgorithmus, insbesondere eine künstliche Intelligenz, beispielsweise als neuronales Netzwerk, beurteilt. Es wird dann beurteilt, ob die Schwachstelle 18 offen ist. Sollte dies der Fall sein, so wird im Block 24 das Schließen der Schwachstelle 18 durch einen Nutzer durchgeführt. Im Block 26 erfolgt dann wiederum der Vorschlag des maschinellen Lernalgorithmus zu ähnlichen Komponenten dies zuzuordnen, insbesondere basierend auf so genannten Tags. Im Block 28 wird ausgehend vom Block 22 oder vom Block 24 entschieden, dass die Schwachstelle 18 geschlossen ist. Im Block 30 können dann basierend auf gleichen Änderungen entsprechende Tags hinzugefügt werden. Im Block 32 können auf Basis des maschinellen Lernalgorithmus die Tags zu Komponenten beziehungsweise Funktionseinheiten 14 ergänzt werden. Sollten beispielsweise neue Komponenten beziehungsweise Funktionseinheiten 14 hinzugefügt werden, so erfolgt dies vorliegend im Block 34. Es können dann im Block 36 wiederum die entsprechenden Tags zu der neuen Funktionseinheit 14 hinzugefügt werden.

Insbesondere zeigt die FIG. 2 somit einen Ablauf eines so genannten Security-/Vulnerability Usecases, wobei in FIG. 2 dieser toolbasiert vorgeschlagen ist. Die entsprechenden Funktionseinheiten 14 werden zum Beispiel im Industrial Security Vulnerability Manager (IVM), was insbesondere im Tool zur Software-Identifizierung, Monitoring und Update-Bereitstellung für Security-Belange entspricht, und vorliegend durch die elektronische Recheneinrichtung 10 dargestellt ist, importiert. Vorbedingung ist hierbei, dass die entsprechenden Tags ergänzt werden, die Informationen werden dabei automatisch bereitgestellt, um eine Nutzerfreundlichkeit zu erhöhen. Die Tags werden statisch zugeordnet, beispielsweise funktionseinheitenabhängig, anlagenteilabhängig, IP-Netzabhängig oder konfigurationsabhängig. Alle Informationen, die bekannt sind, werden herangezogen. Ein Nutzer kann zusätzlich eigene Tags beziehungsweise Attribute einfügen. Diese können zum Beispiel aus der Projektierung eines Automatisierungssystem abgeleitet werden, zum Beispiel durch Bezeichnen von Automatisierungskomponenten, zum Beispiel einer Maschine oder einem Maschinentyp, einer Automatisierungs-Zelle, einer Automatisierungs-Zone, einer Produktionslinie, eines Standorts oder diese werden zugeordnet. Ebenso ist es möglich, aktuelle Betriebsdaten, zum Beispiel ein aktueller Betriebsmodus einer Maschine, Zustandsdaten des physikalischen, technischen Systems, zu berücksichtigen. Ferner können weitere Tags zugeordnet werden. Hierzu ist ebenfalls ein maschineller Lernalgorithmus, insbesondere KI-basiert, als Programmunterstützung als zusätzliche Hilfeleistung möglich, um den Scope der Zuordnung zu erhöhen. Der maschinelle Lernalgorithmus überprüft hierbei neben den zu prüfenden Kriterien, wie in der Vergangenheit bei ähnlichen Fällen agiert wurde, oder sie agiert hier als Aufwandsreduzierung. Die Tags beziehungsweise Attribute sind zu beurteilen, zu clustern und Vorschläge aufzuzeigen, was eine Verbesserung darstellt. Vorbedingung ist, dass alle Schwachstellen 18 dieser Art durch die elektronische Recheneinrichtung 10 gefunden und verändert werden können. Basierend auf diesen Änderungen lernt der maschinelle Lernalgorithmus wiederum und macht Vorschläge für weitere Änderungen.

Dabei bezeichnen im vorliegenden Fall Tags Eigenschaften einer Komponente oder einer Schwachstelle 18 die manuell oder automatisch zugewiesen werden können und maschinenlesbar sind. Sie können somit durch ein Programm oder einem maschinellen Lernalgorithmus, beispielsweise einer künstlichen Intelligenz, weiterverarbeitet und verglichen werden. Beispiele sind dies Hardware-/Firmware-/Software-Version, IP-Adresse, Netzwerkbereich, offene Ports, physikalischer Standort, Zugehörigkeit zu einem bestimmten Anlagenteil/Fertigungslinie, Gruppe innerhalb der in der Vergangenheit Schwachstellen gleich behandelt wurden etc. Eine Komponente beziehungsweise Funktionseinheit 14 kann beliebig viele Tags besitzen.

## Patentansprüche

1. Verfahren zum Überwachen eines Steuerprogramms (12) zumindest einer Funktionseinheit (14) einer Maschinenanlage (16) mittels einer elektronischen Recheneinrichtung (10), mit den Schritten:
- Detektieren einer Schwachstelle (18) innerhalb des Steuerprogramms (12); (S1)
- Kategorisieren der detektierten Schwachstelle (18) auf Basis bereits in der Vergangenheit analysierten Schwachstellen; (S2.1, S2.2, S2.3) und
- Vorschlagen einer Behebungsmaßnahme für die Schwachstelle (18) in Abhängigkeit von der Kategorisierung. (S3)

2. Verfahren nach Anspruch 1,
**dadurch gekennzeichnet, dass**
die Schwachstelle (18) in zumindest zwei, insbesondere in zumindest drei, Kategorien kategorisiert wird.

3. Verfahren nach Anspruch 2,
**dadurch gekennzeichnet, dass**
eine erste Kategorie die Schwachstelle (18) als offen bezeichnet (S2.1), eine zweite Kategorie die Schwachstelle (18) als geschlossen bezeichnet (S2.2) und eine dritte Kategorie die Schwachstelle (18) als nicht relevant für die Funktionseinheit (14) bezeichnet (S2.3).

4. Verfahren nach einem der vorhergehenden Ansprüche,
**dadurch gekennzeichnet, dass**
die Kategorisierung auf Basis einer Schwachstellen-Charakteristik der Schwachstelle (18) durchgeführt wird.

5. Verfahren nach Anspruch 4,
**dadurch gekennzeichnet, dass**
mittels der Schwachstellen-Charakteristik eine Art und/oder einen Hersteller der betroffenen Funktionseinheit (14) und/oder einen Ort der betroffenen Funktionseinheit (14) beschrieben wird.

6. Verfahren nach einem der vorhergehenden Ansprüche,
**dadurch gekennzeichnet, dass**
als Behebungsmaßnahme eine Aktualisierung des Steuerprogramms (12) vorgeschlagen wird.

7. Verfahren nach einem der vorhergehenden Ansprüche,
**dadurch gekennzeichnet, dass**
innerhalb der Kategorisierung die Schwachstelle (18) mit weiteren Schwachstellen verglichen wird und bei einer Ähnlichkeit der Schwachstelle (18) mit zumindest einer weiteren geschlossenen Schwachstelle die Behebungsmaßnahme der bereits geschlossenen, weiteren Schwachstelle für die Schwachstelle (18) vorgeschlagen wird.

8. Verfahren nach einem der vorhergehenden Ansprüche,
**dadurch gekennzeichnet, dass**
die Detektion der Schwachstelle (18) und/oder die Kategorisierung der Schwachstelle (18) und/oder das Vorschlagen der Behebungsmaßnahme mittels eines maschinellen Lernalgorithmus der elektronischen Recheneinrichtung (10) durchgeführt wird.

9. Verfahren nach einem der vorhergehenden Ansprüche,
**dadurch gekennzeichnet, dass**
die kategorisierte Schwachstelle (18) analysiert wird und für eine Detektion und/oder eine Kategorisierung und/oder einer Behebung einer zukünftigen Schwachstelle berücksichtigt wird.

10. Verfahren nach einem der vorhergehenden Ansprüche,
**dadurch gekennzeichnet, dass**
eine Auswirkung der Behebung für die Schwachstelle (18) auf eine weitere detektierte Schwachstelle überprüft wird.

11. Verfahren nach einem der vorhergehenden Ansprüche,
**dadurch gekennzeichnet, dass**
die elektronische Recheneinrichtung (10) als maschinenexterne, zentrale elektronische Recheneinrichtung (10) bereitgestellt wird.

12. Verfahren nach einem der vorhergehenden Ansprüche,
**dadurch gekennzeichnet, dass**
die Durchführung der Behebungsmaßnahme automatisiert mittels der elektronischen Recheneinrichtung (10) durchgeführt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Überwachen eines Steuerprogramms (12) zumindest einer Funktionseinheit (14) einer Maschinenanlage (16), wobei die elektronische Recheneinrichtung (10) zum Durchführen eines Verfahrens nach einem der Ansprüche 1 bis 12 ausgebildet ist.
